# EUROPÄISCHE PATENTSCHRIFT

(11) **EP 1 197 368 B1**
(45) Veröffentlichungstag und Bekanntmachung des Hinweises auf die Patenterteilung: **14.07.2004**
(21) Anmeldenummer: 01120161.3
(22) Anmeldetag: 22.08.2001
(51) Int. Cl.: B60J 7/20

(54) **Mehrteilige Abdeckung für Fahrzeuge**
Multipart cover for vehicle
Couvercle multi-pièce pour véhicule

(30) Priorität: 10.10.2000 DE 10050286
(43) Veröffentlichungstag der Anmeldung: 17.04.2002
(73) Patentinhaber: CTS Fahrzeug-Dachsysteme GmbH, 21079 Hamburg (DE)
(72) Erfinder: Wagner, Tobias, 21149 Hamburg (DE); Brettmann, Jörg, 27367 Sottrum (DE)
(74) Vertreter: Müller, Gottfried

(56) Entgegenhaltungen:
- EP-A- 0 882 615
- EP-A- 1 038 710
- DE-A- 19 712 967
- DE-C- 4 211 918
- US-A- 2 747 928
- US-A- 4 799 729
- US-A- 5 921 608
- US-A- 5 967 593

## Beschreibung

Die Erfindung betrifft eine mehrteilige Abdeckung für Fahrzeuge mit versenkbarem Verdeck, insbesondere für die karosserieseitige Verdeckaufnahme solcher Fahrzeuge, gemäß dem Oberbegriff des Anspruches 1.

Solche mehrteilige Abdeckungen für Cabriolets sind beispielsweise aus der gattungsgemäßen DE 197 12 967 A1 bekannt und bestehen aus einem Mittelteil und daran seitlich anschließenden Seitenteilen, die bei geschlossener Abdeckung oberflächenbündig zum Mittelteil liegen. Die Seitenteile sind über das Mittelteil getragen und mit dem Mittelteil jeweils über ein Drehschiebegelenk verbunden, derart, dass sie durch translatorischen Höhenversatz aus der geschlossenen Ausgangslage, in der Mittelteil und Seitenteile in einer durch das Mittelteil bestimmten Bezugsebene liegen, in eine Lage zum Mittelteil kommen, in der sie in eine Überdeckungslage zum Mittelteil einschwenkbar sind. In dieser Überdeckungslage liegen die Seitenteile im wesentlichen unter dem Mittelteil. Die jeweilige Verstellbewegung der Seitenteile gegenüber dem sie tragenden Mittelteil wird über einen hydraulischen Stellantrieb bewirkt, wobei die erforderliche Abfolge von translatorischer und rotatorischer Verstellbewegung zusätzliche konstruktive und/oder steuerungstechnische Vorkehrungen erforderlich macht.

Eine dieser bekannten Abdeckung funktional insoweit entsprechende, weitere mehrteilige Abdeckung ist aus der DE 44 46 483 A1 bekannt und besteht aus einem Mittelteil, das als Abdeckeinheit aus zwei Abdeckteilen aufgebaut ist, und seitlich zum Mittelteil liegenden Seitenteilen. Die Abdeckteile sind durch Plattenteile gebildet, von denen das bezogen auf die Fahrtrichtung vordere, den Fondsitzen des Fahrzeuges benachbarte Plattenteil ein erstes Abdeckteil bildet, während das andere, in Richtung auf die Heckklappe des Fahrzeuges anschließende Abdeckteil als zweites Abdeckteil von zwei Plattenteilen gebildet wird. Die beiden Plattenteile des zweiten Abdeckteiles sind ihrerseits über eine in Fahrzeugquerrichtung verlaufende Schwenkachse verbunden und gemeinsam, gegeneinander gefaltet, in eine aufrechte Schwenklage zum ersten Abdeckteil umzustellen.

Die Abdeckteile sind seitlich jeweils von einer Gleitschiene getragen und gegenüber dieser längsverschieblich, wobei die in Fahrzeuglängsrichtung verlaufende Gleitschiene, als Bestandteil einer Führungseinheit, ihrerseits gegen eine karosseriefeste Führungsschiene der Führungseinheit verfahrbar ist. Die wechselseitigen Verfahrbarkeiten werden genutzt, um bei geschlossenem Verdeck des Fahrzeuges und flächig zueinander liegenden, eine Abdeckebene bestimmenden Abdeckteilen der Abdeckeinheit eine innenseitig an das Verdeck anschließende "Hutablage" zu bilden. Bei geöffnetem, abgelegtem Verdeck wird der von diesem in seiner Schließlage zwischen Heckklappe des Fahrzeuges und "Hutablage" durchsetzte Spalt von der Abdeckeinheit überdeckt, die hierzu eine in Richtung auf die Heckklappe verlagerte Abdeckstellung einnimmt.

Im Übergang, d.h. bei der Überführung des Verdeckes aus seiner geschlossenen Lage in seine im Verdeckkasten abgelegte Lage, wird der Zugang zum Verdeckkasten als Aufnahmeraum für das Verdeck dadurch freigegeben, dass bei dem geschlossenen Verdeck entsprechender, bezogen auf die Fahrtrichtung vordere Stellung der Gleitschiene und bezogen auf die Fahrtrichtung vordere Stellung des ersten Abdeckteils die zwei Plattenteile des zweiten Abdeckteiles gegeneinander gefaltet und in eine aufrechte, zum ersten Abdeckteil überdeckende Position aufgestellt sind.

Seitlich zum zweiten Abdeckteil liegen die Seitenteile, die lediglich bei im Verdeckkasten abgelegtem Verdeck zum durch die beiden Abdeckteile gebildeten Mittelteil ausgefahren sind, in den anderen Stellungen der Abdeckeinheit aber über das zweite Abdeckteil eingeschwenkt sind. Dies geschieht bei Abstützung des jeweiligen Seitenteiles gegen einen Schwenkbock, der zum bezogen auf die Fahrtrichtung vorderen Plattenteil des zweiten Abdeckteiles lagefest ist und mit der Führungseinheit antriebsverbunden ist, derart, dass, in Abhängigkeit von der Stellung der Führungseinheit, das jeweilige Seitenteil aus der flächigen Lage zum Abdeckteil angehoben und über dieses eingeschwenkt wird, bzw. aus der eingeschwenkten Lage ausgeschwenkt und in die flächenbündige Lage zum Abdeckteil überführt wird.

Eine weitere mehrteilige Abdeckung ist aus der US 2 959 447 bekannt und dient der Überdeckung des Rücksitzbereiches bei Cabriolet-Fahrzeugen. Die Seitenteile werden bei dieser Lösung dem Mittelteil über ebenenparallel zu einer - bei geschlossener Abdeckung Mittelteil und Seitenteile enthaltenden - Bezugsebene verlaufende Schwenkachsen vom Mittelteil getragen und sind in Richtung auf ihre Seitenstellung zum Mittelteil, in der sie gemeinsam mit dem Mittelteil in der durch das Mittelteil bestimmten Bezugsebene liegen, federnd belastet. In Abhängigkeit von der Verschwenkung des Mittelteils von der Abdecklage in eine Öffnungslage erfolgt die Verschwenkung der Seitenteile gegenüber dem Mittelteil in deren Überdeckungslage zum Mittelteil gegen Federkraft.

Bei einer weiteren bekannten Lösung - DE 39 39 145 A1 - sind die Seitenteile der aus Mittelteil und Seitenteilen bestehenden Abdeckung karosserieseitig über aufrechte Schwenkachsen gelagert und die Einschwenkbewegung der Seitenteile unter das Mittelteil ist mit einer Längsverschiebung des Mittelteiles in Richtung auf die karosserieseitig feststehenden Schwenkachsen der Seitenteile verbunden.

Ferner ist aus der EP 0 302 963 B1 eine Verdeckkastenabdeckung für Cabriolets bekannt, bei der das Mittelteil der aus Mittelteil und Seitenteilen bestehenden Abdeckung mit einer die Abgrenzung zwischen Fahrzeuginnenraum und Verdeckkasten bildenden aufrechten Rückwand einstückig ausgebildet ist, die ihrerseits in ihrem unteren, dem Fahrzeugboden zugewandten Bereich um eine Fahrzeugquerachse verschwenkbar mit der Karosserie des Fahrzeuges verbunden ist. Durch Verschwenken der zum Mittelteil einstückigen Rückwand in Richtung auf den Fahrzeuginnenraum kann das Mittelteil in eine Öffnungslage überführt werden, wobei die Schwenkbewegung der Rückwand in Richtung auf den Fahrzeuginnenraum in Verbindung mit einer karosserieseitigen Anlenkung der Seitenteile um aufrechte Schwenkachsen genutzt wird, die Seitenteile in Richtung auf die Fahrzeuglängsmittelebene einzuschwenken und in Überdeckung zum Mittelteil zu bringen.

Des Weiteren ist aus der US 5,967,593 A eine mehrteilige Verdeckkastenabdeckung mit einem Mittelteil und seitlich anschließenden Seitenteilen bekannt, die als Ganzes in Fahrzeuglängsrichtung verlagerbar ist und die bei geschlossenem Verdeck - in ihrer vorderen Stellung - mit ihrem Mittelteil, gegenüber dem die Seitenteile nach oben aufgeklappt sind, eine Hutablage bildet. Bei geöffnetem, im Verdeckkasten abgelegten Verdeck nimmt die Abdeckung ihre hintere Lage ein, in der sie an den Kofferraumdeckel anschließt und bei in die Seitenstellung ausgeklappten Seitenteilen den Verdeckkasten abdeckt. In dieser Abdecklage liegen Seitenteil und Mittelteil im Wesentlichen in einer durch das Mittelteil bestimmten Bezugsebene.

Die Seitenteile sind mit dem Mittelteil über längs der Seitenkanten des Mittelteiles verlaufende Schwenkachsen verbunden und in ihre nach oben aufgeklappte Stellung über gegen das Mittelteil abgestützte Federelemente belastet. In Gegenrichtung, also in Richtung auf ihre Seitenstellung sind die Seitenteile über Zugmittel beaufschlagbar, über die bei Verstellung der Abdekkung in ihre hintere Stellung die Seitenteile in ihre Seitenstellung gezogen und in der hinteren Stellung der Abdeckung auch gehalten sind.

Der Erfindung liegt die Aufgabe zugrunde, eine mehrteilige Abdeckung der eingangs genannten Art, die zwischen einer geschlossenen und einer geöffneten Position umstellbar ist und bei der in der geschlossenen, den Verdeckkasten mit darin verstautem Verdeck überdeckenden Position die Seitenteile oberflächenbündig zum Mittelteil liegen, dahingehend auszubilden, dass in der geschlossenen Position der Abdeckung eine stabile Abstützung der vom Mittelteil getragenen Seitenteile in oberflächenbündiger Zuordnung zum Mittelteil gewährleistet ist und dass in Verbindung mit der Überführung der mehrteiligen Abdekkung in eine Öffnungsstellung eine einfache Umstellbarkeit der Seitenteile in ihre Überdeckungslage zum Mittelteil gegeben ist.

Gemäß der Erfindung wird dies durch die kennzeichnenden Merkmale des Anspruches 1 erreicht, wobei die Seitenteile in Richtung des Höhenversatzes elastisch nachgiebig gegen das Mittelteil abgestützt sind, derart, dass bei Umstellung der Abdeckung in ihre geöffnete Position die Seitenteile aus ihrer zum Mittelteil oberflächenbündigen Lage in eine zum Mittelteil höhenversetzte Lage gelangen. Diese ist Voraussetzung für eine Überführung der Seitenteile in eine Überdeckungsstellung zum Mittelteil. Der Höhenversatz der Seitenteile zum Mittelteil wird beim Schließen der Abdeckung dadurch überbrückt, dass die Seitenteile sich jeweils gegen einen Anschlag, insbesondere einen karosserieseitigen - und bevorzugt karosseriefesten - Anschlag abstützen, derart, dass sie bei geschlossener Lage der Abdeckung in die zum Mittelteil oberflächenbündige Lage gedrückt und in dieser gehalten sind, also in einer gemeinsamen, vom Mittelteil bestimmten Bezugsebene liegen.

Die erfindungsgemäß vorgesehene Lagesicherung der Seitenteile zum Mittelteil über karosserieseitige Anschläge und die Nutzung dieser Anschläge zum Versatz der Seitenteile in ihre oberflächenbündige Lage zum Mittelteil beim Überführen der Abdeckung von ihrer geöffneten in ihre geschlossene Position lässt sich im Rahmen der Erfindung sowohl in Verbindung mit Abdeckungen realisieren, die in ihrer Gesamtheit durch Verschwenken zwischen ihrer Schließ- und ihrer Öffnungsposition verstellbar sind, insbesondere um eine in Fahrzeugquerrichtung verlaufende Achse verschwenkbar sind, wie auch in Verbindung mit Abdeckungen, die in ihrer Gesamtheit zumindest über Teilbereiche ihre Verstellung zwischen Öffnungs- und Schließposition verschiebbar geführt sind, wobei Schiebe- und Schwenkbewegungen auch kombiniert sein können. In vorteilhafter Weise können Schiebe- oder Schwenkbewegungen der Abdeckung als Ganzes, also beim Einlaufen in die geschlossene Position oder beim Verlassen der geschlossenen Position im Rahmen der Erfindung genutzt werden, um die Seitenteile der in ihrer Gesamtheit ein Mittelteil und Seitenteile umfassenden Abdeckung in Kontakt mit den Anschlägen zu bringen, oder aus der Abstützlage zu den Anschlägen zu entfernen, so dass diese entweder in die Bezugsebene gedrückt, also in eine oberflächenbündige Lage zum Mittelteil gebracht werden oder aus dieser Lage in ihre zur Bezugsebene höhenversetzte Lage übertreten, als Ausgangslage zur Überführung in ihre Überdeckungslage zum Mittelteil.

Eine besonders zweckmäßige weitere Ausgestaltung besteht darin, die mehrteilige Abdeckung gemäß der Erfindung in Verbindung mit Klappverdecken für Fahrzeuge einzusetzen, bei denen ein gemeinsamer Stellantrieb für das Verdeck und die mehrteilige Abdeckung vorgesehen ist, wobei, bezogen auf das geöffnete und abgelegte Verdeck, der Antrieb für die Abdeckung als Ganzes zur Überführung von der Öffnungs- in die Schließposition und umgekehrt nur freigegeben wird, wenn das Verdeck in der Verdeckaufnahme schon oder noch abgelegt ist. Dies gilt sowohl für das Öffnen des Verdecks als auch für das Schließen des Verdeckes. Für den Antrieb der Seitenteile gegenüber dem Mittelteil wird die Relativbewegung zwischen der Abdeckung insgesamt und dem Verdeckgestänge genutzt, die erst freigegeben wird oder nur freigegeben ist, wenn das Verdeck abgelegt ist.

Für die Anbindung der Seitenteile am Mittelteil erweist es sich jeweils als zweckmäßig, einen am Mittelteil geführten Träger vorzusehen, wobei erfindungsgemäß bevorzugt durch die Art der Anbindung des Seitenteiles gegenüber dem Träger die Möglichkeit des Höhenversatzes des Seitenteiles gegenüber der vom Mittelteil bestimmten Bezugsebene realisierbar ist, in der Seitenteile und Mittelteil bei oberflächenbündiger Lage, also bei geschlossener Abdeckung liegen.

Im Rahmen der Erfindung ist es aber auch möglich, den Träger selbst entsprechend elastisch auszugestalten, beispielsweise als Blattfeder auszugestalten, die sich bei Abstützung des Seitenteiles am Anschlag soweit verformt, dass das Seitenteil in die oberflächenbündige Lage zum Mittelteil gedrückt werden kann.

Insbesondere bei zylindrischer Lagerung eines starren Trägers gegenüber einem am Mittelteil vorgesehenen, zur Bezugsebene aufrechten, die Schwenkachse des jeweiligen Seitenteiles bestimmenden Drehzapfens kann das Seitenteil, zum Versatz aus der Bezugsebene, schwenkbar und/oder ebenenparallel verschieblich mit dem Träger verbunden sein. Eine schwenkbare Verbindung erweist sind insbesondere als zweckmäßig, wenn für die Überführung des jeweiligen Seitenteiles in die Überdeckungslage zum Mittelteil das Seitenteil zunächst nur im Bereich der Stoßkante zum Mittelteil gegenüber diesem in seiner Höhenlage versetzt werden soll, so dass eine Schräglage des Seitenteils zur Bezugsebene gegeben ist, in der das Seitenteil in Richtung des Höhenversatzes teilweise noch in Überschneidung zum Mittelteil liegt und diese Überschneidung beim Einfahren in die Überdeckungslage zum Mittelteil dadurch beseitigt wird, dass die Schwenkachse für den Träger in einer zur Lotrechten auf die Bezugsebene leicht geneigten Position angeordnet wird, so dass sich in Verbindung mit der Schwenkbewegung ein Höhenversatz zur Bezugsebene ergibt.

Insbesondere in Verbindung mit einer derartigen schwenkbaren Verbindung des Trägers mit dem Seitenteil erweist es sich als vorteilhaft, den Träger im Bereich seines freien Endes über eine Schwenkachse mit dem Seitenteil zu verbinden, wobei der Träger bevorzugt in einem Bereich des Seitenteiles liegt, in dem sich eine breite Überdeckung zwischen Seitenteil und Träger ergibt, so dass von der Schwenkachse zur Stoßkante des Seitenteils gegenüber dem Mittelteil ein verhältnismäßig großer Schwenkradius gegeben ist, der bei kleinem Schwenkwinkel den erforderlichen Höhenversatz ermöglicht.

Eine bevorzugte Lage für den Träger, bzw. die Schwenkachse in der Verbindung von Träger zu Mittelteil besteht darin, diese jeweils gegenüberliegend zu jenem Bereich des Mittelteils vorzusehen, in dem das Seitenteil in seine Überdeckungslage zum Mittelteil einschwenkt.

Im Rahmen der Erfindung ist es auch möglich, das Seitenteil, beispielsweise über Blattfederführungen oder dergleichen, parallelverschieblich zum Träger anzuordnen, wobei eine solche Lösung insbesondere zweckmäßig ist, wenn der Träger querverschieblich am Mittelteil, also zumindest im wesentlichen parallel zur Bezugsebene verschieblich geführt ist, so dass die Seitenteile in ihrer zur Bezugsebene höhenversetzten Lage von der Seite in die Überdeckung zum Mittelteil einlaufen.

Weitere Einzelheiten und Merkmale der Erfindung ergeben sich aus den Ansprüchen. Ferner wird die Erfindung nachstehend anhand von Ausführungsbeispielen mit weiteren Details erläutert. Es zeigen:
- Fig. 1: in stark schematisierter Darstellung einen Ausschnitt eines Fahrzeuges mit einem abklappbaren Verdeck, dessen Verdeckführung nur in den Grundzügen gezeigt ist und das für das abgelegte Verdeck eine Verdeckaufnahme aufweist, der eine Abdeckung zugeordnet ist,
- Fig. 2: in Seitenansicht eine isolierte Darstellung einer der Verdeckaufnahme zugeordneten mehrteiligen Abdeckung,
- Fig. 3: die Abdeckung gemäß Figur 2 entsprechend dem Pfeil III in Fig. 2 in einer Ansicht von unten, wobei die zur Fahrzeuglängsmittelebene symmetrische mehrteilige
- Fig. 4: Abdeckung nur teilweise dargestellt ist, eine weitere Teildarstellung der mehrteiligen Abdeckung, wobei diese in aufgeklapptem Zustand, entsprechend Fig. 5 in einer Rückansicht gemäß dem Pfeil IV, gezeigt ist, in der die Seitenteile der Abdeckung in eine Überdeckungslage zum Mittelteil eingeschwenkt sind,
- Fig. 5: eine Seitenansicht gemäß Pfeil V in Fig. 4 der Abdeckung in ihrer die Verdeckaufnahme freigebenden Öffnungsposition, in der sie bezogen auf die Fahrtrichtung nach vorne oben geschwenkt ist,
- Fig. 6: in einem schematisierten Schnitt gemäß Linie VI-VI in Fig. 2 die Anbindung eines Seitenteils an das Mittelteil der Abdeckung bei zum Mittelteil seitlicher Lage des Seitenteils, entsprechend den Figuren 2 und 3,
- Fig. 7: in schematisierter Darstellung eine Steuerung für eine Abdeckung für ein in seiner geschlossenen Lage gezeigtes, in einer Verdeckaufnahme abzulegendes Verdeck mit abgezweigtem Antrieb für die Abdeckung,
- Fig. 8: eine Zwischenstellung für die Abdeckung bei bereits in der Verdeckaufnahme abgelegtem Verdeck,
- Fig. 9: die Endstellung für die Abdeckung mit Überdeckung der Verdeckaufnahme, und
- Fig. 10: eine Schnittdarstellung gemäß Schnittlinie X-X in Fig. 7, schematisiert und im Hinblick auf die Verdeutlichung der funktionalen Zusammenhänge abgewandelt, durch die Steuerung für das Verdeck und den Anschluss derselben an die Steuerung der Abdeckung.

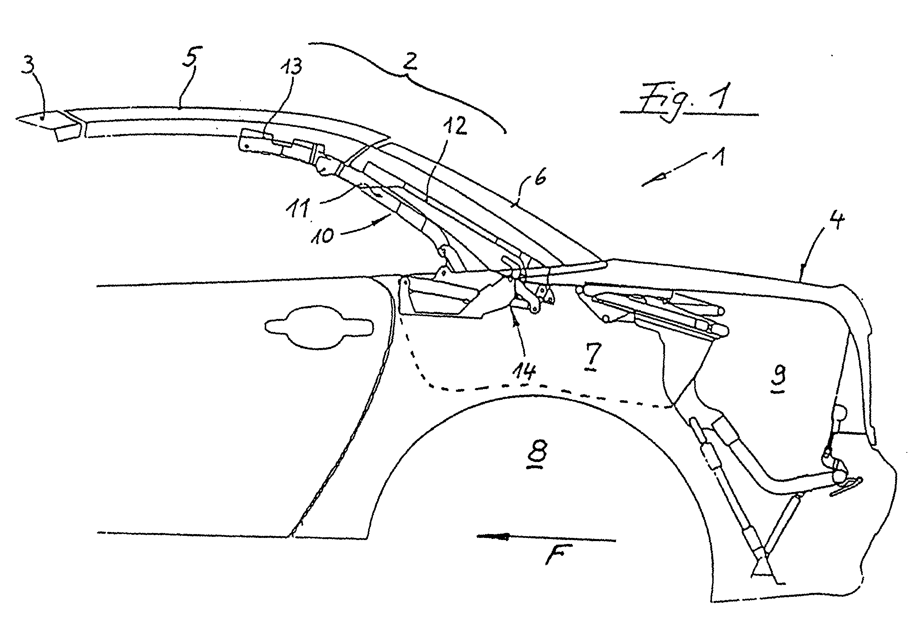

Fig. 1 zeigt in schematisierter Darstellung den rückwärtigen Teil eines Fahrzeuges 1, das ein zu öffnendes Verdeck 2 aufweist, welches sich zwischen dem hier angedeuteten Windschutzscheibenrahmen 3 und der heckseitig vorgesehenen Kofferraumabdeckung 4 erstreckt. Das Verdeck 2 ist in diesem Beispielsfall durch ein sogenanntes Hardtop gebildet, welches einen an den Windschutzscheibenrahmen 3 anschließenden Dachteil 5 sowie einen Rückfensterteil 6 umfasst. Dachteil 5 und Rückfensterteil 6 sind bei geöffnetem Verdeck 2 in eine Verdeckaufnahme 7 eingebracht, die sich im wesentlichen oberhalb des Radausschnittes 8 zwischen Fahrzeuginnenraum und Kofferraum 9 erstreckt, wobei die Verdeckaufnahme 7 teilweise in den Kofferraum 9 hineinragt.

Die Führung von Dachteil 5 und Rückfensterteil 6 ist als Zwangsführung ausgebildet und wird durch ein Viergelenkgetriebe 10 gebildet, das im wesentlichen nur schematisiert dargestellt ist und das einen vorderen Führungslenker 11, einen rückwärtigen Führungslenker 12 sowie eine Koppel 13 umfasst, von denen die Koppel 13 mit dem Dachteil 5 fest verbunden ist und die Führungslenker 11 und 12 um karosseriefeste Schwenkachsen verschwenkbar sind. Der rückwärtige Führungslenker 12 ist fest mit dem Rückfensterteil 6 verbunden und gegebenenfalls durch diesen gebildet, der vordere Führungslenker 10 ist im bezogen auf die Fahrtrichtung F vorderen Endbereich an der Koppel 13 angelenkt und gegebenenfalls mehrteilig ausgebildet. Derartige Führungseinrichtungen sind, verbunden mit Dachteil 5 und Rückfensterteil 6, in symmetrischer Anordnung auf beiden Seiten des Fahrzeuges vorgesehen und umfassen jeweils auch einen Stellantrieb 14, der durch einen Stellzylinder veranschaulicht ist.

Das Ein- und Ausfahren des Verdeckes in bzw. aus der Verdeckaufnahme 7 bedingt deren Öffnung nach oben, wobei die Verdeckaufnahme 7, bei einer Gesamtkonstruktion gemäß Fig. 1, teilweise durch die Kofferraumabdeckung 4, in deren geschlossenem Zustand, und teilweise durch eine in Fig. 1 nicht dargestellte Abdeckung überdeckt ist.

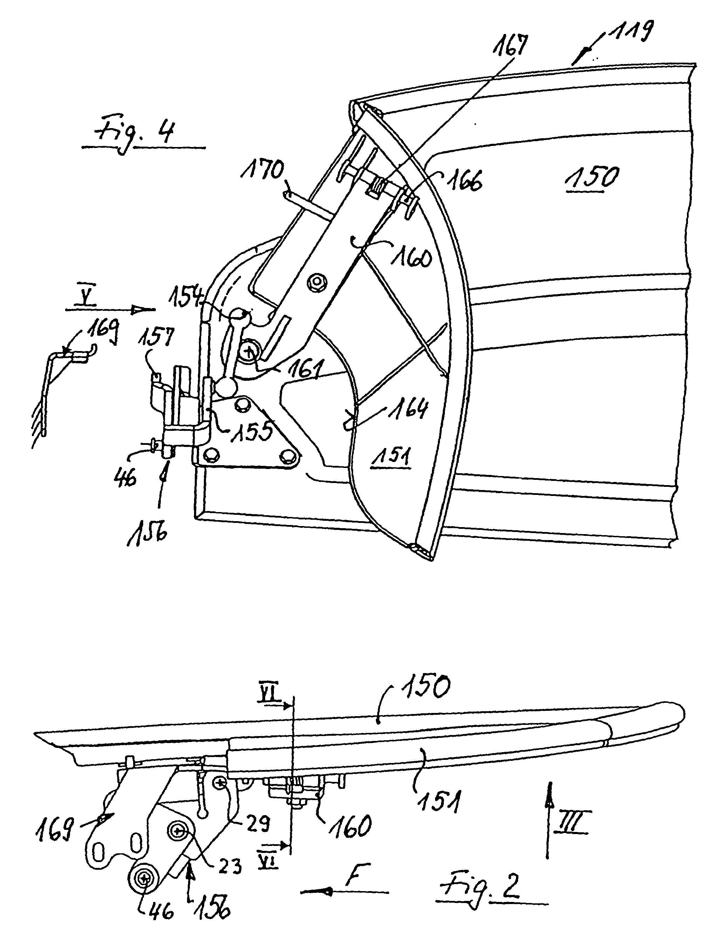

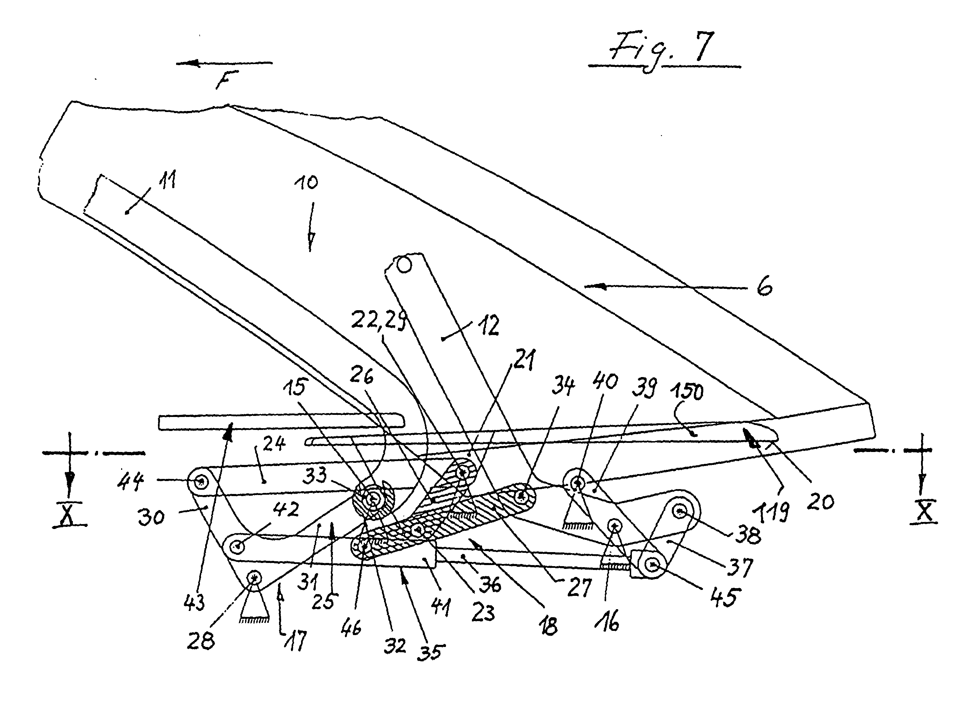

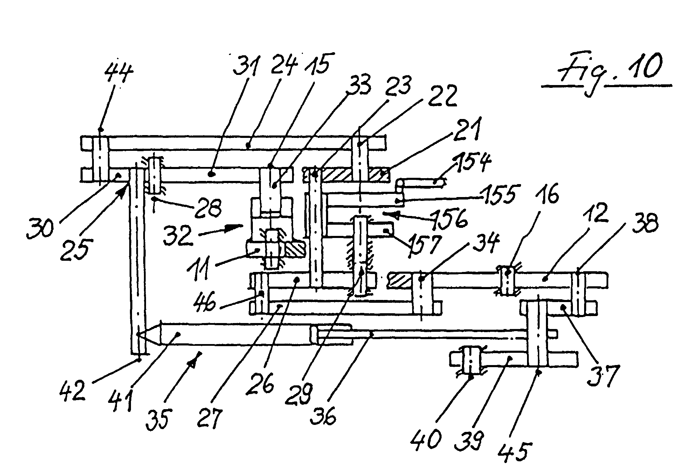

Diese Abdeckung ist in ihrer erfindungsgemäßen Ausgestaltung in den Figuren 2 bis 6 veranschaulicht und mit 119 bezeichnet, und es zeigen darüber hinaus die Figuren 7 bis 10 eine im Rahmen der Erfindung besonders zweckmäßige Möglichkeit der kombinierten Verdeck- und Abdeckungsbetätigung über einen gemeinsamen Stellantrieb in einer schematisierten Darstellung. In den Figuren 7 bis 9 ist die Abdeckung 119 der Einfachheit halber als einteiliges Element dargestellt, wobei diese Darstellungen auch nur die Verstellung der Abdeckung 119 als Ganzes veranschaulichen, und die davon abgezweigte Antriebsverbindung für die Verstellung der Seitenteile 151 der Abdeckung 119 gegenüber deren Mittelteil 150 in Fig. 10 angedeutet ist.

Zum Verständnis der Darstellungen gemäß Figuren 7 bis 9 sei darauf hingewiesen, dass durch den Bewegungsablauf des Viergelenkgetriebes 10 der Rückfensterteil 6 in seiner in der Verdeckaufnahme 7 abgelegten Position auf dem Rücken liegt, also mit seiner bei geschlossenem Verdeck dem Fahrzeuginnenraum zugewandten Innenseite nach oben, und vom Dachteil 5 in seiner Normalposition, also mit nach oben und außen liegender Dachhaut, überdeckt ist.

Fig. 1 macht deutlich, dass bei in seiner geschlossenen Position befindlichem Verdeck 2 die dem Verdeckkasten 7 zugeordnete, in Fahrtrichtung F vor der Kofferraumabdeckung 4 liegende Abdeckung 119 nicht unmittelbar an die Kofferraumabdeckung 4 anschließen kann, da zwischen diesen Abdeckungsbereichen das Verdeck 2 mit seinem Rückfensterteil 6 liegt. Dies bedingt, bezogen auf die Abdeckung 119 zwischen ihren Abdecklagen bei geschlossenem und bei geöffnetem Verdeck 2, einen Längsversatz, wenn durch die Abdeckung 119 bei geöffnetem, in der Verdeckaufnahme 7 abgelegten Verdeck 2 auch der Bereich überdeckt werden soll, der bei geschlossenem Verdeck 2 in der Abdeckebene vom Rückfensterteil 6 eingenommen wird.

Bevor auf die Verstellung der Abdeckung 119 insgesamt eingegangen wird, wird diese in ihrer erfindungsgemäßen Ausgestaltung nachstehend anhand der Figuren 2 bis 6 erläutert.

Die insgesamt mit 119 bezeichnete Abdeckung besteht aus einem Mittelteil 150 und Seitenteilen 151, wobei im Hinblick auf die symmetrische Ausbildung der Abdeckung 119 diese nur teilweise dargestellt ist, und insbesondere auch nur eines der Seitenteile 151 gezeigt ist.

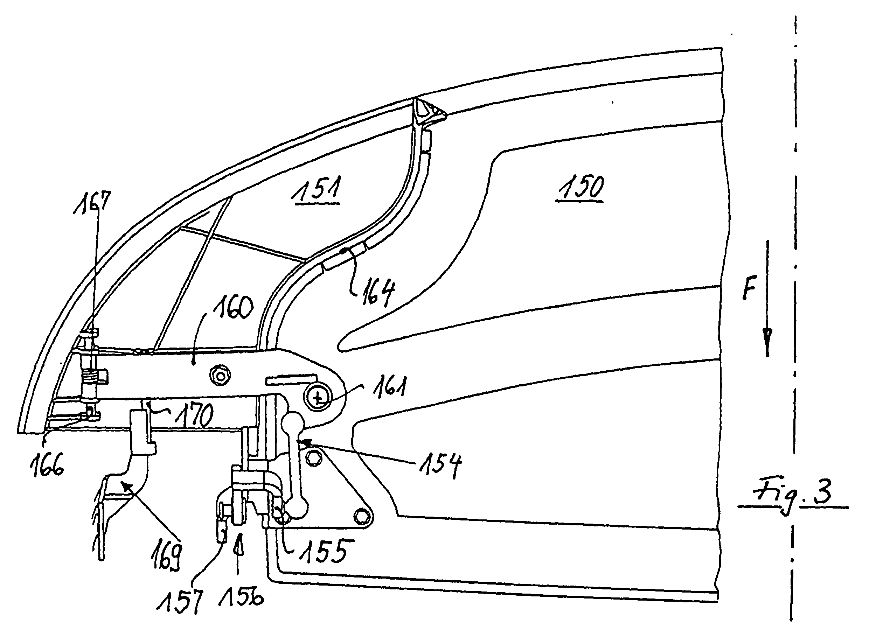

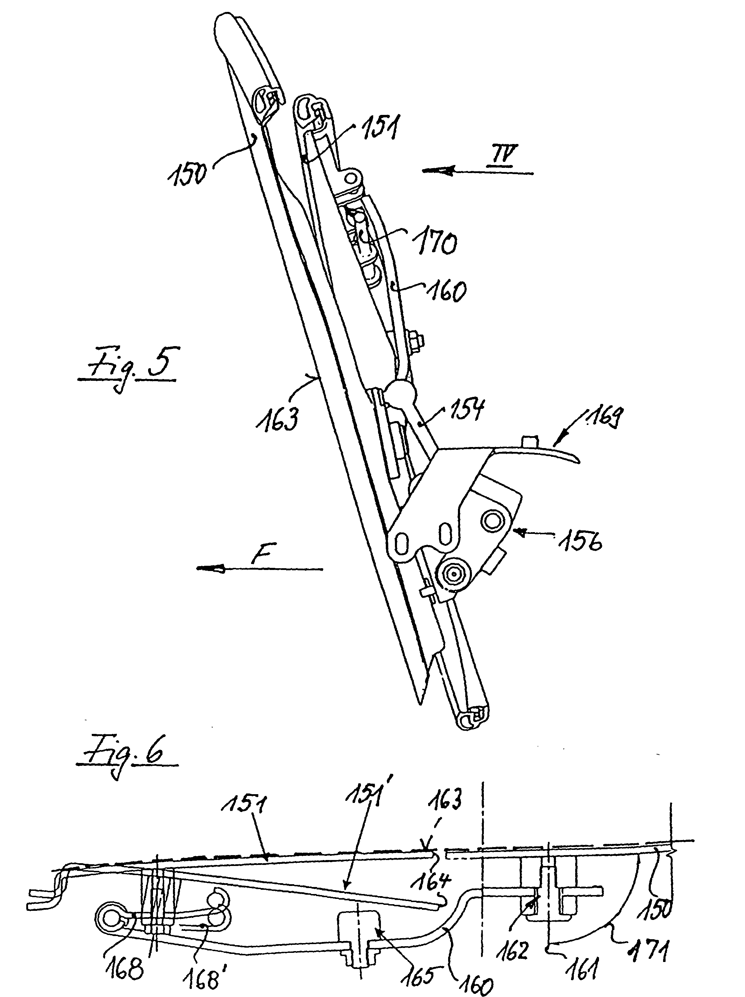

Die Seitenteile 151 schließen an das Mittelteil 150 in seitlicher Verlängerung an (Fig. 3) und sind so mit dem Mittelteil 150 verbunden, dass sie aus ihrer seitlichen Stellung zum Mittelteil 150 (Figuren 2 und 3) in eine Überdeckungsstellung zum Mittelteil (Figuren 4 und 5)umgestellt werden können.

Damit wird dem Sachverhalt Rechnung getragen, dass, bezogen auf Fig. 1, die Abdeckung 119 bei geschlossenem Verdeck Raum für die Führungslenker 10 und 11 geben muss, andererseits aber mit dem Mittelteil 150 die Verdeckaufnahme 7 im Sinne einer Hutablage überdecken soll, während bei geöffnetem Verdeck die Verdeckaufnahme 7 von der Abdeckung 119 im vor der Kofferraumabdeckung 4 liegenden Bereich abgeschlossen sein soll.

Über die Abdeckung 119 wird bei in einer Seitenstellung zum Mittelteil 150 liegenden Seitenteilen 151 eine oberflächenbündige, bevorzugt dichtend an das Mittelteil 150 anschließende Lage angestrebt, die für eine Überführung der Seitenteile 151 in die Überdeckungslage zum Mittelteil 150 gemäß Fig. 4 als Voraussetzung einen Höhenversatz zwischen Mittelteil 150 und Seitenteilen 151 bedingt.

Die erfindungsgemäße Lösung sieht hierzu vor, dass die Seitenteile 151 zumindest im Anschlussbereich an das Mittelteil 150 als Konstruktionslage eine solche höhenversetzte Lage einnehmen, und in Abhängigkeit von der Lage der Gesamtabdeckung 119 in die gewünschte, oberflächenbündige Lage zum Mittelteil 150 gebracht werden, wenn die Abdeckung 119 in ihrer Gesamtheit ihre geschlossene Position einnimmt.

In der oberflächenbündigen Lage der Seitenteile 151 zum Mittelteil 150 liegen diese Teile der Abdeckung 119 mit ihrer Oberfläche in einer Bezugsebene, die vom Mittelteil 150 bestimmt ist. Die Seitenteile 151 sind mit dem Mittelteil 150 über einen Träger 160 verbunden, der der Unterseite der Abdeckung 119 zugeordnet ist und am Mittelteil 150 um eine zur Bezugsebene 163 (Fig. 6) aufrechte Schwenkachse 161 schwenkbar angelenkt ist, die durch einen Zapfen 162 oder dgl. gebildet ist. Bezogen auf die Seitenstellung der Seitenteile 151 zum Mittelteil 150 erstreckt sich der Träger 160 in Fahrzeugquerrichtung, wobei der Träger 160, wie in Fig. 6 veranschaulicht, zur Unterseite des Seitenteiles 151 beabstandet ist, also zur Bezugsebene, in Fig. 6 bei 163 angedeutet, einen Höhenversatz aufweist.

Im Hinblick auf die angestrebte Verschwenkbarkeit der Seitenteile 151 in die Überdeckungslage zum Mittelteil 150, wie in Fig. 4 gezeigt, sind die Seitenteile 151 mit dem Träger 160 in Richtung des Höhenversatzes elastisch federnd verbunden, und zwar bezogen auf das gezeigte Ausführungsbeispiel derart, dass sie, wie in Fig. 6 mit 151' angedeutet, im Bereich ihrer Stoßkante 164 zum Mittelteil 150 höhenversetzt liegen. Die Größe des Höhenversatzes kann dabei über einen dem Träger 160 zugeordneten Anschlagpuffer 165 begrenzt sein.

Die elastisch federnde Abstützung des Seitenteils 151 gegen den Träger 160 ist im Ausführungsbeispiel dadurch erreicht, dass das Seitenteil 151 im Bereich des freien Endes des Trägers 160 schwenkbar mit diesem verbunden ist, und zwar in der Ausgestaltung gemäß Fig. 3 über einen Schwenkbolzen 166, der an Träger 160 und/oder Seitenteil 151 schwenkbar gelagert ist und der die Führung für eine Schenkelfeder 167 bildet, die bezüglich ihrer Schenkel so gegenüber dem Träger 160 und dem Seitenteil 151 abgestützt ist, dass das Seitenteil 151 im Bereich seiner dem Mittelteil 150 zugewandten Stoßkante 164 in Richtung auf den Träger 160 gegenüber der Bezugsebene 163 abgesenkt ist (Lage 151').

Fig. 6 veranschaulicht eine weitere Möglichkeit der schwenkbar federnden Abstützung des Seitenteiles 151 gegenüber dem Träger 160 und es ist hier mit dem Träger 160 ein blattfederartiges Stützelement verbunden, das in seiner der Konstruktionslage entsprechenden, höhenversetzten Stellung mit 168' bezeichnet ist und zum Träger 160 in Richtung auf die Bezugsebene 163 auslenkbar ist und das das Seitenteil 151 trägt. Zur aus der Konstruktionslage abgedrängten, zum Mittelteil 150 oberflächenbündigen Lage des Seitenteiles korrespondiert das Stützelement in seiner mit 168 bezeichneten Lage.

Nicht dargestellt ist, dass der Träger 160 selbst als blattfederartiges Element ausgebildet sein kann, das eine dem Seitenteil 151 in seiner Konstruktionslage 151' entsprechende Ausgangslage vorgibt, also eine zur Bezugsebene 163 höhenversetzte Ausgangslage.

Weiter sind auch Ausführungsformen nicht dargestellt, bei denen das Seitenteil 151 eine insgesamt zur Bezugsebene 163 höhenversetzte Lage einnimmt, so dass sich in Annäherung eine zur Bezugsebene 163, etwa parallele Konstruktionslage für das Seitenteil 151 ergibt, aus der dieses entgegen seiner elastischen Abstützung angehoben werden kann. Die elastische Abstützung kann in diesem Fall beispielsweise durch ein zweischenkliges blattfederartiges Element gebildet sein, so dass auch eine ausreichende Querführung gegenüber dem Träger 160 erreicht ist.

Wird, wie im Ausführungsbeispiel gemäß Fig. 6 veranschaulicht, in der Konstruktionslage lediglich im Bereich der Stoßkante 164 ein Höhenversatz des Seitenteiles 151 gegenüber der Bezugsebene 163 vorgesehen, so ist erfindungsgemäß die Schwenkachse 161 derartig geneigt zur Lotrechten auf die Bezugsebene 163 angeordnet, dass sich bei der Verschwenkung des Seitenteiles 151 aus der Seitenstellung zum Mittelteil 150 gemäß Fig. 3 in die Überdeckungsstellung zum Mittelteil 150 gemäß Fig. 4 über dem Schwenkweg ein Höhenversatz ergibt, durch den das Seitenteil 151 beim Einfahren in die Überdeckungslage auch in jenen Bereichen zur Bezugsebene 163 einen Höhenversatz erreicht, die in der Konstruktionslage noch in Überschneidung zur Bezugsebene 163, bzw. dem Mittelteil 150 liegen. Fig. 6 veranschaulicht diesbezüglich, dass die Schwenkachse 161 in der Projektion auf eine Querebene des Fahrzeuges, in der sich auch der Träger 160 im wesentlichen erstreckt, zur Bezugsebene 163 auf der dem Seitenteil 151 zugewandten Seite einen Winkel einschließt, der kleiner 90° ist, bevorzugt im Bereich von etwa 85° liegt. Der Gegenwinkel ist in Fig. 6 bei 171 angedeutet.

Insbesondere Figuren 3 und 4 veranschaulichen, dass der Abdeckung 119 ein karosserieseitig abgestützter Anschlag 169 zugeordnet ist, dessen direkte oder indirekte Anbindung zur Karosserie nicht gezeigt ist und der so angeordnet ist, dass in der Abdecklage der Abdeckung 119, die in Fig. 3 veranschaulicht ist, das Seitenteil 151 mit einem entsprechenden Abstützbereich zu diesem in Überdeckung liegt. Dieser Abstützbereich ist im Ausführungsbeispiel durch einen Stützzapfen 170 veranschaulicht, der dem Seitenteil 151 zugeordnet ist und der in der Relation zum Anschlag 169 so in der Höhenlage positioniert ist, dass sich für das Seitenteil 151 nach Erreichen der Abdecklage für die gesamte Abdeckung 119 eine oberflächenbündige Ausrichtung zum Mittelteil 150 ergibt, und zwar dadurch, dass das Seitenteil 151 entgegen seiner elastisch federnden Abstützung gegenüber dem Träger 160, oder bei elastischer Abstützung über den Träger 160 selbst, durch das Zusammenwirken des Anschlages 169 mit dem Stützzapfen 170 in die oberflächenbündige Lage zum Mittelteil 150 gedrückt wird. Veranschaulicht ist dies durch die Darstellung eines Anschlages 169, im Rahmen der Erfindung können aber selbstverständlich auch mehrere derartige Anschläge als Abstützungen vorgesehen sein. Ferner ist es auch möglich, den Anschlag beweglich derart anzuordnen, dass er lediglich dann, wenn er benötigt wird - ausgeschwenktes Seitenteil, geschlossene oder nahezu geschlossene Abdeckung - ,eine Fixlage einnimmt. Hierzu ist die Zuordnung des Anschlages zum Verdeckgestänge ebenfalls möglich, das bei abgelegtem Verdeck 2 eine Festlage einnimmt (Fig. 7-9).

Im Rahmen der Erfindung kann über den Anschlag 169 gleichzeitig eine Positionierung bzw. Sicherung der Abdeckung 119 gegen eine Verschiebung in Fahrzeuglängsrichtung, insbesondere in Fahrtrichtung F erreicht werden, z.B. dadurch, dass der Anschlag 169 und der Stützzapfen 170 in der Anschlagstellung eine entsprechende Überdeckung in Höhenrichtung aufweisen, womit auch eine zusätzliche Unfallsicherung erreichbar ist.

Anhand des vorstehenden Ausführungsbeispieles wurde die Überführung der Seitenteile 151 in die Überdeckungsstellung zum Mittelteil 150 durch Schwenkbewegung beschrieben. Im Rahmen der Erfindung liegt es aber auch, die entsprechende Überdeckungsstellung durch seitliches Einschieben der Seitenteile unter das Mittelteil 150 vorzunehmen, was unter Beibehalt der Grundkonstruktion beispielsweise dadurch erreicht werden kann, dass dem Träger 160 seitens des Mittelteiles 150 eine entsprechende Schiebeführung zugeordnet wird. Auch bei einer derartigen Lösung kann das Seitenteil nach Ausfahren in seine Seitenstellung beim Ablegen der Abdeckung 119 auf einen Anschlag auflaufen und durch diesen, zum Ausgleich des Höhenversatzes, in die Bezugsebene gedrückt werden.

Bezogen auf die verschwenkbare Verbindung der Seitenteile 151 mit dem Mittelteil 150 gemäß dem beschriebenen Ausführungsbeispiel ist ein Schwenkantrieb veranschaulicht, bei dem exzentrisch zur Schwenkachse 161 am Träger 160 eine Stützstrebe 154 angreift, die über Kugelgelenke mit dem Träger 160 und einem Hebel 156 verbunden ist, der U-förmige Grundform aufweist und dessen einer Hebelarm 155 mit der Stützstrebe 154 verbunden ist, während über den anderen Hebelarm 157 die Verbindung zum Antrieb des Verdeckes 2 hergestellt wird, wobei diese Verbindung so gestaltet ist, dass für das Verdeck 2 und die Gesamtabdeckung 119, also Mittelteil 150 und Seitenteile 151 zunächst ein gemeinsamer Bewegungsablauf vorgegeben ist. Dieser ist so gestaltet, dass der Verlagerung des Verdeckes 2 in Öffnungs- oder Schließrichtung, ausgehend von der geöffneten bzw. der abgelegten Position, jeweils die Verlagerung der Abdeckung 119 vorgeschaltet ist, wobei in der Anfangsphase des Öffnens bzw. in der Endphase des Schließens der Abdeckung 119 Mittelteil 150 und Seitenteile 151 zusätzlich gegeneinander verstellt werden. Die Verstellbewegung der Seitenteile 151 gegen das Mittelteil 150 wird dadurch erreicht, dass die Seitenteile 151, bei feststehendem Hebel 156, über die Stützstreben 154 bei weiterer Verschiebung des Mittelteiles 150 in Richtung auf die Schließlage der Gesamtabdeckung 119 festgehalten werden. Die Verschiebebewegung für die Gesamtabdeckung 119 wird also genutzt, um die Seitenteile 151 in ihre Seitenstellung zum Mittelteil 150 zu überführen, in der sie bei Verschiebung des Mittelteiles 150 entgegen der Fahrtrichtung F auf die Anschläge 169 auflaufen, da die Seitenteile 151 durch die Schwenkbewegung mit ihrer in der Seitenstellung vorderen Kante sich in Fahrtrichtung bewegen.

Die Figuren 7 bis 10 veranschaulichen für die Abdeckung 119 eine mögliche, zweckmäßige Ausgestaltung des Antriebs in Zwangskopplung zum Verdeck 2, derart, dass beim Verschwenken des Verdeckes 2 zwischen Schließ- und Öffnungslage die Abdeckung 119 jeweils entsprechend mitgeführt wird, wobei der gemeinsame Antrieb unter Beibehalt seiner jeweiligen Vortriebsrichtung, für den Öffnungs- und den Schließvorgang entgegengesetzt, jeweils durchgängig vorgesehen ist.

In den Figuren 7 bis 9 wird das dem Verdeck 2 zugeordnete Viergelenkgetriebe durch eine Teildarstellung des vorderen Führungslenkers 11 und des rückwärtigen Führungslenkers 12 veranschaulicht, ergänzt durch eine schematische Darstellung des Rückfensterteiles 6. Führungslenker 11 bzw. 12 weisen karosseriefeste Schwenkachsen 15 bzw. 16 auf.

Gekoppelt mit den Führungslenkern 11 bzw. 12 sind jeweils Führungsgestänge 17 bzw. 18, die ihrerseits die Abdeckung 119 in ihrer Gesamtheit steuern, die symbolisch durch das Mittelteil 150 dargestellt ist.

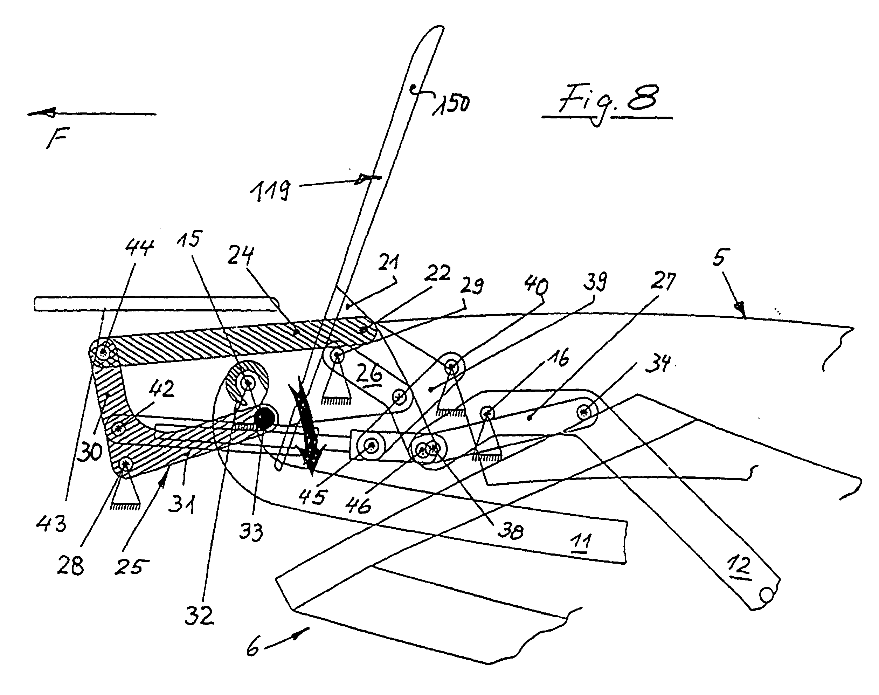

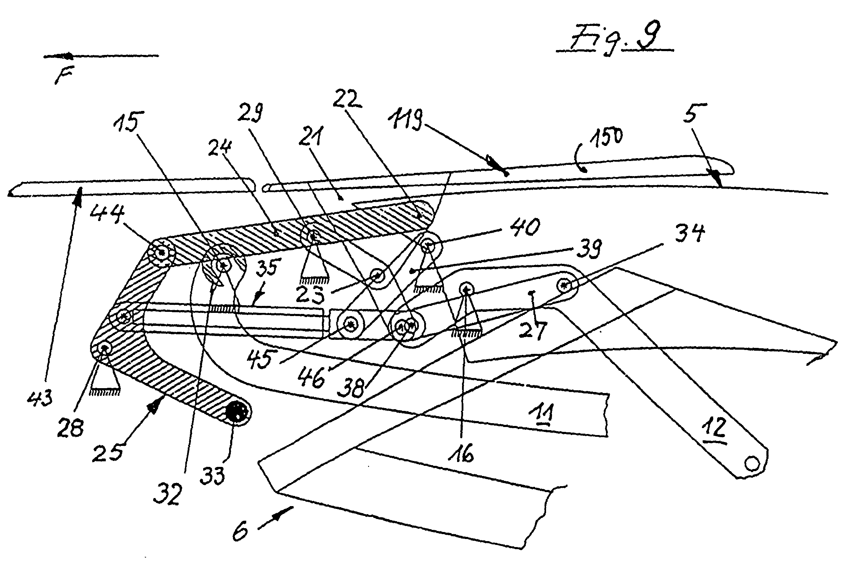

Bezüglich der Lage der Abdeckung 119 zeigt Fig. 7 deren Stellung bei geschlossenem Verdeck 2, Fig. 8 eine Zwischenstellung bei bereits in der Verdeckaufnahme 7 abgelegtem Verdeck 2 und Fig. 9 die Endstellung bei über die Abdeckung 119 überdeckter Verdeckaufnahme 7, also bei einer Lage der Abdeckung 119, in der gemäß Figuren 2 und 3 die Seitenteile 151 oberflächenbündig zum Mittelteil 150 liegen. Demgegenüber sind in der Situation gemäß Fig. 7 die Seitenteile 151 unter das Mittelteil 150 eingeschwenkt, und es veranschaulicht Fig. 8 eine Situation, bei der das Verdeck 2 seine Ablageposition im Verdeckkasten 7 erreicht hat und für die Abdeckung 119 auf Grund der Bewegungsentkopplung gegenüber den Führungslenkern 11 und 12 und der Relativbewegung des Mittelteiles 150 zu den Führungslenkern 11 und 12 sowie den Führungsgestängen 17 und 18 die Ausschwenkbewegung der Seitenteile 151 beginnt.

In der Ausgangslage gemäß Fig. 7 - geschlossenes Verdeck 2 und Abdeckung 119 mit unter das Mittelteil 150 eingeschwenkten Seitenteilen 151 gemäß Fig. 4 - liegt die Abdeckung 119 in Fahrzeuglängsrichtung in Überdeckung zu einer im Übergang zum Fahrzeuginnenraum liegenden Verkleidung 43, wobei die Größe dieser Überdeckung etwa der Größe des Spaltes entspricht, der bei geschlossenem Verdeck 2 - Fig. 7 - durch das im Übergang zwischen Abdeckung 119 und Kofferraumabdeckung 4 liegende Rückfensterteil 6 bedingt ist.

An der Unterseite 20 des Mittelteiles 150 der Abdeckung 119 ist eine Konsole 21 vorgesehen, die in Richtung des Höhenversatzes zwischen Mittelteil 150 und Seitenteil 151 bei in Überdeckung zum Mittelteil 150 liegenden Seitenteilen, und damit bezogen auf die Darstellung gemäß Fig. 7 in Höhenrichtung beabstandet Führungspunkte 22 und 23 aufweist, wobei im ersten Führungspunkt 22 das vordere Führungsgestänge 17 und im zweiten Führungspunkt 23 das rückwärtige Führungsgestänge 18 angelenkt ist. Die Führungsgestänge 17 und 18 sind jeweils durch ein Hebelpaar gebildet, wobei die Hebel des Führungsgestänges 17 mit 24 und 25 und die Hebel des Führungsgestänges 18 mit 26 und 27 bezeichnet sind. Von den Hebeln 24, 25; 26, 27 jedes Hebelpaares 17 und 18 ist jeweils einer karosseriefest angelenkt, nämlich für das Führungsgestänge 17 der Hebel 25 und für das Führungsgestänge 18 der Hebel 26. Die durch diese karosseriefesten Anlenkungen bestimmten Drehachsen sind mit 28 und 29 bezeichnet.

Der Hebel 25 ist als Winkelhebel mit Armen 30 und 31 ausgebildet, die in entgegengesetzten Richtungen schräg nach oben verlaufen und von denen der bezogen auf die Fahrtrichtung F rückwärtige Hebelarm 31 in der Ausgangslage gemäß Fig. 7 - geschlossenes Verdeck - an seinem freien Ende über ein Fangmaul 32 des vorderen Führungslenkers 11 konzentrisch zu dessen Schwenkachse 15 gehalten ist. Das Fangmaul 32 nimmt einen seitlich vom Arm 31 abragenden Zapfen 33 auf und ist nach oben offen, so dass der Arm 31 in der Situation gemäß Fig. 7 nicht nach unten ausschwenken kann. Am freien Ende des anderen Armes 30 des Hebels 25 ist der Hebel 24 über eine Schwenkachse 44 angelenkt. Der Hebel 24 erstreckt sich, bezogen auf die dargestellte Ausgangslage, im Wesentlichen parallel zur Abdeckung 119 und ist den Arm 31 übergreifend im oberen, ersten Führungspunkt 22 mit der Konsole 21 verbunden.

Dieser erste Führungspunkt 22 liegt in der Ausgangslage gemäß Fig. 7 koaxial zur karosseriefesten Drehachse 29 des Hebels 26 des Führungsgestänges 18, der in seinem längsmittleren Bereich im zweiten Führungspunkt 23 mit der Konsole 21 verbunden ist und an dessen anderen Ende der Hebel 27 im Punkt 46 angelenkt ist, der seinerseits in einem Drehpunkt 34 mit dem rückwärtigen Führungslenker 12 verbunden ist.

Der rückwärtige Führungslenker 12 ist über den Stellantrieb 35 beaufschlagt, der für das Verdeck 2 und die Abdeckung 119 gemeinsam wirksam ist und der durch einen Stellzylinder 41 gebildet ist. Dieser beaufschlagt über seine Kolbenstange 36 unter Vermittlung eines Viergelenkgetriebes den rückwärtigen Führungslenker 12, wobei die Anlenkung am Führungslenker 12 über eine Stützstrebe 37 erfolgt, die ihrerseits am über die Schwenkachse 16 hinausragenden Ende des rückwärtigen Führungslenkers 12 im Punkt 38 angelenkt ist und die koaxial zur Anlenkung 45 der Kolbenstange 36 über eine Haltestrebe 39 im Anlenkpunkt 40 drehbar karosseriefest abgestützt ist.

Gegenüberliegend ist der Stellantrieb 35 über den Zylinder 41 im Anlenkpunkt 42 am Arm 30 des Hebels 25 abgestützt, der seinerseits durch die Lagerung auf der karosseriefesten Drehachse 28 und die Abstützung im Fangmaul 32 lagefest gehalten ist, bis durch Zusammenfahren des Stellantriebes 35 - mit entsprechender Verschwenkung des rückwärtigen Führungslenkers 12 und des über diesen mitgenommen vorderen Führungslenkers 11 in Richtung auf die Ablageposition des Verdeckes 2 in der Verdeckaufnahme 7 - der vordere Führungslenker 11 eine Schwenklage erreicht, in der die Öffnung des Fangmaules 32 etwa tangential zu einem zur Drehachse 28 konzentrischen Bogen durch die Schwenkachse 15 liegt, derart, dass über die Zugkraftbeanspruchung des Stellantriebes 35 der Hebel 25 den Zapfen 33 aus dem Fangmaul 32 ausfädelt.

Dieser im Ablauf der Darstellung in Fig. 8 voraufgehenden Ausfädelposition entspricht die Endstellung des Verdeckes 2 in der Verdeckaufnahme 7. In Richtung auf diese Endstellung wirken die Massekräfte des Verdeckes 2, sobald eine Grenzlage im Öffnungsweg des Verdeckes 2 überschritten ist, und die Endstellung in der Verdeckaufnahme 7 entspricht einer Anschlagstellung für das Verdeck 2, so dass dieses beim weiteren Verschwenken der Abdeckung 119 im Sinne des Schließens - Aufbringen einer Zugkraft über den Stellantrieb 35 - seine Lage beibehält und lediglich die Abdeckung 119 in Richtung auf ihre Endstellung gemäß Fig. 9 - Überdeckung der Verdeckaufnahme 7 bei abgelegtem Verdeck 2 - verlagert wird. Ist diese Endstellung als Schließstellung der Abdeckung 119 erreicht, so sind über den Stellantrieb 35 beide Verschwenkpartner - Abdeckung 119 und Verdeck 2 - in ihrer Endlage bei geöffnetem Verdeck 2 gehalten.

Dem vorgeschilderten in den Figuren 7 bis 9 veranschaulichten Ablauf entsprechend läuft, in umgekehrter Reihenfolge, der Schließvorgang des Verdeckes 2 ab. Ausgehend von Fig. 9 wird durch Ausfahren des Stellantriebes 35 - bei Abstützung gegen die Massekräfte des Verdeckes 2 - zunächst die Abdeckung 119 angehoben (Fig. 8), und es wird im Verlauf des weiteren Anhebens der Hebel 25 des Führungsgestänges 17 in Richtung auf das Fangmaul 32 des nach wie vor in der abgesenkten Ruhelage befindlichen vorderen Führungslenkers 11 verschwenkt. Schließlich fädelt der Zapfen 33 in das Fangmaul 32 ein. Damit ist für das Führungsgestänge eine der Ausgangslage gemäß Fig. 7 entsprechende Situation gegeben, in der der Führungspunkt 22 als Drehachse fixiert ist, um den der Führungspunkt 23 über den Hebel 26 des Führungsgestänges 18 verschwenkt wird, womit beim weiteren Ausfahren des Stellantriebes 35 das Verdeck 2 aus der Verdeckaufnahme 7 angehoben und in Schließrichtung verschwenkt wird. Hierbei eilt die Schließbewegung des Verdeckes 2 der Schließbewegung der Abdeckung 119 bezogen auf deren Überführung in die in Fig. 7 dargestellte Abdecklage voraus.

Für den Antrieb der Abdeckung 119 wird die Relativbewegung der Abdeckung 119 zum Verdeck 2 genutzt, die sich ergibt, wenn das Verdeck 2 bereits seine Lage in der Verdeckaufnahme 7 einnimmt und der Stellantrieb 35 - nach Freigabe des Zapfens 33 durch das Fangmaul 32 - die Abdeckung 119 in Richtung auf ihre Endlage bei geöffnetem Verdeck 2 verschiebt. Die überlagerte Relativbewegung zwischen Mittelteil 150 und Seitenteilen 151 der Abdeckung 119 wird dadurch erreicht, dass bei Verschiebung des Mittelteils 150 die Seitenteile 151 festgehalten und dadurch gegenüber dem Mittelteil 150 verschwenkt werden. Die am Mittelteil 150 gelagerten Seitenteile 151 sind hierzu jeweils über die Stützstrebe 154 mit dem Hebel 156 verbunden, der über seinen Arm 157 mit einem bei abgelegtem, in der Verdeckaufnahme 7 ruhenden Verdeck 2 an einem feststehenden Teil der Steuerung für Verdeck 2 und Abdeckung 199 angebunden ist. Hierfür ist erfindungsgemäß die Anbindung an den Hebel 26 als Teil des Führungsgestänges 18 vorgesehen, wobei, Vice Versa, der Hebelarm 157 auch diesen Hebel 26 bilden kann. Die entsprechende Anordnung veranschaulicht auch Fig. 10, und es sind, um die Zuordnung zu verdeutlichen, die dem Hebel 26 gemäß Figuren 7 bis 9 zugeordneten Anschlüsse, nämlich die Drehachse 29, der Führungspunkt 23 und der Anlenkpunkt 46, in der Darstellung gemäß Fig. 2 auch angedeutet.

## Patentansprüche

1. Mehrteilige Abdeckung für Fahrzeuge mit versenkbarem Verdeck (2), insbesondere für die karosserieseitige Verdeckaufnahme (7) bei Cabriolets, bei denen die karosserieseitige Abdeckung (119) zwischen einer geschlossenen und einer geöffneten Position umstellbar ist und ein Mittelteil (150) und daran anschließende, mit dem Mittelteil (150) tragend verbundene Seitenteile (151) umfasst, die aus ihrer Seitenstellung zum Mittelteil (150), in der sie mit dem Mittelteil (150) in einer durch das Mittelteil (150) bestimmten Bezugsebene (163) liegen, unter Höhenversatz zur Bezugsebene (163) in eine von der Seite unter das Mittelteil eingeschobene Überdeckungsstellung zum Mittelteil (150) überführbar sind,
**dadurch gekennzeichnet,**
**dass** die Seitenteile (151) in Richtung des Höhenversatzes auf ihre zur Bezugsebene versetzte Lage elastisch nachgiebig gegen das Mittelteil (150) abgestützt sind und dass bei Umstellung der Abdeckung (119) in ihre geschlossene Position die Seitenteile (151) in ihrer Seitenstellung über karosserieseitige Anschläge (169) beaufschlagt und entgegen der nachgiebigen Abstützung in die das Mittelteil (150) enthaltende Bezugsebene (163) gedrückt sind.

2. Mehrteilige Abdeckung nach Anspruch 1,
**dadurch gekennzeichnet,**
**dass** die Seitenteile (151) jeweils über einen Träger (160) mit dem Mittelteil (150) verbunden und in Richtung des Höhenversatzes elastisch nachgiebig gegen den Träger (160) abgestützt sind.

3. Mehrteilige Abdeckung nach Anspruch 2,
**dadurch gekennzeichnet,**
**dass** die Seitenteile (151) jeweils über eine druckfederartig in Richtung auf den Träger (160) wirkende Abstützung belastet sind.

4. Mehrteilige Abdeckung nach Anspruch 2,
**dadurch gekennzeichnet,**
**dass** die Seitenteile (151) jeweils über eine elastische nachgiebige, zugfederartig wirkende Abstützung mit dem Träger (160) verbunden sind.

5. Mehrteilige Abdeckung nach einem der Ansprüche 2 bis 4,
**dadurch gekennzeichnet,**
**dass** der jeweilige, einem Seitenteil (151) zugeordnete Träger (160) um eine zur durch das Mittelteil (150) bestimmten Bezugsebene (163) aufrechte Schwenkachse (161) mit dem Mittelteil (150) verbunden ist.

6. Mehrteilige Abdeckung nach Anspruch 5,
**dadurch gekennzeichnet,**
**dass** der Träger (160) gegenüber der Schwenkachse (161) axial unverschieblich geführt ist.

7. Mehrteilige Abdeckung nach einem der Ansprüche 2 bis 6,
**dadurch gekennzeichnet,**
**dass** der Träger (160) zur Bezugsebene (163) höhenversetzt liegt.

8. Mehrteilige Abdeckung nach Anspruch 7,
**dadurch gekennzeichnet,**
**dass** der Höhenversatz des Trägers (160) zur Bezugsebene (163) die Größe des Höhenversatzes des Seitenteiles (151) zur Bezugsebene (163) bestimmt.

9. Mehrteilige Abdeckung nach Anspruch 8,
**dadurch gekennzeichnet,**
**dass** der Höhenversatz des Trägers (160) zur Bezugsebene (163) größer als der mögliche Höhenversatz des Seitenteiles (151) ist.

10. Mehrteilige Abdeckung nach einem der Ansprüche 2 bis 9,
**dadurch gekennzeichnet,**
**dass** die Seitenteile (151) gegenüber dem jeweiligen Träger (160) in Richtung des Höhenversatzes verschieblich zwangsgeführt sind.

11. Mehrteilige Abdeckung nach einem der Ansprüche 2 bis 10,
**dadurch gekennzeichnet,**
**dass** die Träger (160) der Seitenteile (151) sich bei in Seitenstellung befindlichen Seitenteilen (151) in seitlicher Verlängerung des Mittelteiles (150) erstrecken.

12. Mehrteilige Abdeckung nach Anspruch 11,
**dadurch gekennzeichnet,**
**dass** die Träger (160) der Seitenteile (151) bei seitlich zum Mittelteil liegenden Seitenteilen in einer Fahrzeugquerebene liegen.

13. Mehrteilige Abdeckung nach einem der Ansprüche 2 bis 12,
**dadurch gekennzeichnet,**
**dass** die Träger (160) der Seitenteile (151) im bezogen auf die Fahrtrichtung (F) vorderen Bereich der Seitenteile (151) liegen.

14. Mehrteilige Abdeckung nach Anspruch 13,
**dadurch gekennzeichnet,**
**dass** die Seitenteile (151) über ihren bezogen auf die Fahrtrichtung (F) rückwärtigen Bereich in ihre Überdeckungsstellung zum Mittelteil (150) einschwenken.

15. Mehrteilige Abdeckung nach einem der Ansprüche 2 bis 12,
**dadurch gekennzeichnet,**
**dass** die Träger (160) der Seitenteile (151) im bezogen auf die Fahrtrichtung (F) rückwärtigen Bereich der Seitenteile (151) liegen.

16. Mehrteilige Abdeckung nach Anspruch 15,
**dadurch gekennzeichnet,**
**dass** die Seitenteile (151) über ihren bezogen auf die Fahrtrichtung (F) vorderen Bereich in ihrer Überdeckungslage zum Mittelteil (150) einschwenken.

17. Mehrteilige Abdeckung nach einem der Ansprüche 2 bis 16,
**dadurch gekennzeichnet,**
**dass** die Seitenteile (151) im äußeren Endbereich der Träger (160) mit diesen verbunden sind.

18. Mehrteilige Abdeckung nach Anspruch 17,
**dadurch gekennzeichnet,**
**dass** die Träger (160) sich bis in den Randbereich der Seitenteile (151) erstrecken.

19. Mehrteilige Abdeckung nach einem der Ansprüche 2 bis 18,
**dadurch gekennzeichnet,**
**dass** die Träger (160) schwenkbar mit den Seitenteilen (151) verbunden sind.

20. Mehrteilige Abdeckung nach Anspruch 19,
**dadurch gekennzeichnet,**
**dass** die jeweilige Schwenkachse (166) zwischen Träger (160) und Seitenteil (151) in der Seitenstellung des Seitenteiles (151) zur Bezugsebene (163) gleichgerichtet verläuft.

21. Mehrteilige Abdeckung nach Anspruch 20,
**dadurch gekennzeichnet,**
**dass** die jeweilige Schwenkachse (166) zwischen Träger (160) und Seitenteil (151) etwa in Fahrtrichtung (F) verläuft.

22. Mehrteilige Abdeckung nach Anspruch 20 oder 21,
**dadurch gekennzeichnet,**
**dass** die jeweilige Schwenkachse (166) zwischen Träger (160) und Seitenteil (151) quer zur Erstreckungsrichtung des Trägers (160) verläuft.

23. Mehrteilige Abdeckung nach einem der Ansprüche 19 bis 22,
**dadurch gekennzeichnet,**
**dass** die Schwenkachse (166) zwischen Träger (160) und Seitenteil (151) in Richtung des Höhenversatzes verlagerbar ist.

24. Mehrteilige Abdeckung nach Anspruch 23,
**dadurch gekennzeichnet,**
**dass** die Schwenkachse (166) zwischen Träger (160) und Seitenteil (151) über eine Schiebeführung mit dem Träger (160) und/oder dem Seitenteil (151) verbunden ist.

25. Mehrteilige Abdeckung nach Anspruch 23 oder 24,
**dadurch gekennzeichnet,**
**dass** Seitenteil (151) und Träger (160) im Bereich der Schwenkachse (166) federnd gegeneinander abgestützt sind.

26. Mehrteilige Abdeckung nach Anspruch 25,
**dadurch gekennzeichnet,**
**dass** Seitenteil (151) und Träger (160) im Bereich der Schwenkachse (166) aufeinander zulaufend federnd belastet sind.

27. Mehrteilige Abdeckung nach Anspruch 26,
**dadurch gekennzeichnet,**
**dass** die Schwenkachse (166) von einer Schenkelfeder (167) umschlossen ist, deren Schenkel einerseits gegen den Träger (160) und andererseits gegen das Seitenteil (151) abgestützt sind.

28. Mehrteilige Abdeckung nach einem der vorhergehenden Ansprüche,
**dadurch gekennzeichnet,**
**dass** der Anschlag (169) der Kante des Seitenteiles (151) zugeordnet ist, die beim Schließen der Abdeckung (119) gegen die Karosserie aufläuft.

29. Mehrteilige Abdeckung nach Anspruch 28,
**dadurch gekennzeichnet,**
**dass** der Anschlag (169) bei in Fahrtrichtung (F) gegenüber dem Mittelteil (150) ausschwenkendem Seitenteil (151) der in Fahrtrichtung (F) vorderen Kante des jeweiligen Seitenteiles zugeordnet ist.

30. Mehrteilige Abdeckung nach Anspruch 29,
**dadurch gekennzeichnet,**
**dass** das Seitenteil (151) gegenüber dem Mittelteil (150) mit der bei geschlossenem Seitenteil (151) in Fahrtrichtung (F) vorderen Kante gegen den Anschlag (169) aufläuft.

## Claims

1. Multipart cover for vehicles having a retractable top (2), in particular for the top receptacle (7) in the body of cabriolets, in which the body-side cover (119) can be changed over between a closed and an open position and comprises a central part (150) and side parts (151) which adjoin the central part (150), are connected thereto in a load-bearing manner and can be transferred from their side position with respect to the central part (150), in which they are situated with the central part (150) in a reference plane (163) determined by the central part (150), with an offset in height with respect to the reference plane (163) into an overlapping position with respect to the central part (150), which position is pushed in from the side under the central part, **characterized in that** the side parts (151) are supported in the direction of the offset in height to their position, which is offset with respect to the reference plane, in an elastically compliant manner against the central part (150), and **in that**, when the cover (119) is changed over into its closed position, the side parts (151) are acted upon in their side position via stops (169) on the body and are pressed counter to the compliant support into the reference plane (163) containing the central part (150).

2. Multipart cover according to Claim 1, **characterized in that** the side parts (151) are connected in each case to the central part (150) via a carrier (160) and are supported in the direction of the offset in height against the carrier (160) in an elastically compliant manner.

3. Multipart cover according to Claim 2, **characterized in that** the side parts (151) are loaded in each case via a support acting in the direction of the carrier (160) in the manner of a compression spring.

4. Multipart cover according to Claim 2, **characterized in that** the side parts (151) are connected in each case to the carrier (160) via an elastic and compliant support which acts in the manner of a tension spring.

5. Multipart cover according to one of Claims 2 to 4, **characterized in that** the respective carrier (160) assigned to a side part (151) is connected to the central part (150) about a pivot axis (161) which is upright with respect to the reference plane (163) determined by the central part (150).

6. Multipart cover according to Claim 5, **characterized in that** the carrier (160) is guided in an axially nondisplaceable manner with respect to the pivot axis (161).

7. Multipart cover according to one of Claims 2 to 6, **characterized in that** the carrier (160) is offset in height with respect to the reference plane (163).

8. Multipart cover according to Claim 7, **characterized in that** the offset in height of the carrier (160) with respect to the reference plane (163) determines the size of the offset in height of the side part (151) with respect to the reference plane (163).

9. Multipart cover according to Claim 8, **characterized in that** the offset in height of the carrier (160) with respect to the reference plane (163) is larger than the possible offset in height of the side part (151).

10. Multipart cover according to one of Claims 2 to 9, **characterized in that** the side parts (151) are positively guided in a displaceable manner with respect to the respective carrier (160) in the direction of the offset in height.

11. Multipart cover according to one of Claims 2 to 10, **characterized in that** the carriers (160) of the side parts (151) extend as a lateral continuation of the central part (150) when the side parts (151) are in the side position.

12. Multipart cover according to Claim 11, **characterized in that** the carriers (160) of the side parts (151) are situated in a transverse plane of the vehicle when the side parts are situated laterally with respect to the central part.

13. Multipart cover according to one of Claims 2 to 12, **characterized in that** the carriers (160) of the side parts (151) are situated in the front region of the side parts (151) with respect to the direction of travel (F).

14. Multipart cover according to Claim 13, **characterized in that** the side parts (151) pivot over their rear region, with respect to the direction of travel (F), into their overlapping position with respect to the central part (150).

15. Multipart cover according to one of Claims 2 to 12, **characterized in that** the carriers (160) of the side parts (151) are situated in the rear region of the side parts (151) with respect to the direction of travel (F).

16. Multipart cover according to Claim 15, **characterized in that** the side parts (151) pivot over their front region, with respect to the direction of travel (F), into their overlapping position with respect to the central part (150).

17. Multipart cover according to one of Claims 2 to 16, **characterized in that** the side parts (151) are connected to the carriers (160) in the outer end region thereof.

18. Multipart cover according to Claim 17, **characterized in that** the carriers (160) extend into the edge region of the side parts (151).

19. Multipart cover according to one of Claims 2 to 18, **characterized in that** the carriers (160) are connected pivotably to the side parts (151).

20. Multipart cover according to Claim 19, **characterized in that** the respective pivot axis (166) between the carrier (160) and side part (151) runs parallel to the reference plane (163) in the side position of the side part (151).

21. Multipart cover according to Claim 20, **characterized in that** the respective pivot axis (166) between the carrier (160) and side part (151) runs approximately in the direction of travel (F).

22. Multipart cover according to Claim 20 or 21, **characterized in that** the respective pivot axis (166) between the carrier (160) and side part (151) runs transversely with respect to the direction of extent of the carrier (160).

23. Multipart cover according to one of Claims 19 to 22, **characterized in that** the pivot axis (166) between the carrier (160) and side part (151) can be shifted in the direction of the offset in height.

24. Multipart cover according to Claim 23, **characterized in that** the pivot axis (166) between the carrier (160) and side part (151) is connected to the carrier (160) and/or the side part (151) via a sliding guide.

25. Multipart cover according to Claim 23 or 24, **characterized in that** the side part (151) and carrier (160) are supported resiliently against each other in the region of the pivot axis (166).

26. Multipart cover according to Claim 25, **characterized in that** the side part (151) and carrier (160) are loaded resiliently running towards each other in the region of the pivot axis (166).

27. Multipart cover according to Claim 26, **characterized in that** the pivot axis (166) is surrounded by a leg spring (167), the legs of which are supported at one end against the carrier (160) and at the other end against the side part (151).

28. Multipart cover according to one of the preceding claims, **characterized in that** the stop (169) is assigned to that edge of the side part (151) which runs against the body when the cover (119) is closed.

29. Multipart cover according to Claim 28, **characterized in that**, when the side part (151) pivots out with respect to the central part (150) in the direction of travel (F), the stop (169) is assigned to that edge of the respective side part which is in front in the direction of travel (F).

30. Multipart cover according to Claim 29, **characterized in that** the side part (151) runs with respect to the central part (150) against the stop (169) by means of the edge which is in front in the direction of travel (F) when the side part (151) is closed.

## Revendications

1. Recouvrement multi-pièce pour véhicules, comprenant une capote pouvant être rentrée (2), notamment pour le logement de capote (7) du côté de la carrosserie dans le cas de décapotables, dans lesquels le recouvrement (119) du côté de la carrosserie peut être déplacé entre une position fermée et une position ouverte et comprend une partie centrale (150) et des parties latérales (151) s'y raccordant, connectées de manière à porter la partie centrale (150), qui peuvent être transportées de leur position latérale vers la partie centrale (150) dans laquelle elles se trouvent avec la partie centrale (150) dans un plan de référence (163) déterminé par la partie centrale (150), par un décalage en hauteur par rapport au plan de référence (163) dans une position de recouvrement par rapport à la partie centrale (150) enfoncée depuis le côté sous la partie centrale,
**caractérisé en ce que**
les parties latérales (151) sont supportées dans la direction du décalage en hauteur dans leur position décalée par rapport au plan de référence, de manière flexible élastiquement contre la partie centrale (150) et **en ce que** lors du déplacement du recouvrement (119) dans sa position fermée, les parties latérales (151) sont sollicitées dans leur position latérale par le biais de butées (169) du côté de la carrosserie et sont pressées à l'encontre du support flexible dans le plan de référence (163) contenant la partie centrale (150).

2. Recouvrement multi-pièce selon la revendication 1,
**caractérisé en ce que**
les parties latérales (151) sont chacune connectées par le biais d'un support (160) à la partie centrale (150) et sont supportées dans la direction du décalage en hauteur de manière flexible élastiquement contre le support (160).

3. Recouvrement multi-pièce selon la revendication 2,
**caractérisé en ce que**
les parties latérales (151) sont chacune sollicitées par le biais d'un appui agissant à la manière d'un ressort de compression dans la direction du support (160).

4. Recouvrement multi-pièce selon la revendication 2,
**caractérisé en ce que**
les parties latérales (151) sont chacune connectées au support (160) par le biais d'un appui élastique flexible agissant à la manière d'un ressort de traction.

5. Recouvrement multi-pièce selon l'une quelconque des revendications 2 à 4,
**caractérisé en ce que**
le support (160) respectif associé à une partie latérale (151) est connecté à la partie centrale (150) autour d'un axe de pivotement (161) dressé par rapport au plan de référence (163) déterminé par la partie centrale (150).

6. Recouvrement multi-pièce selon la revendication 5,
**caractérisé en ce que**
le support (160) est guidé de manière non déplaçable axialement par rapport à l'axe de pivotement (161).

7. Recouvrement multi-pièce selon l'une quelconque des revendications 2 à 6,
**caractérisé en ce que**
le support (160) est situé en position décalée en hauteur par rapport au plan de référence (163).

8. Recouvrement multi-pièce selon la revendication 7,
**caractérisé en ce que**
le décalage en hauteur du support (160) par rapport au plan de référence (163) détermine l'ampleur du décalage en hauteur de la partie latérale (151) par rapport au plan de référence (163).

9. Recouvrement multi-pièce selon la revendication 8,
**caractérisé en ce que**
le décalage en hauteur du support (160) par rapport au plan de référence (163) est plus important que le décalage en hauteur possible de la partie latérale (151).

10. Recouvrement multi-pièce selon l'une quelconque des revendications 2 à 9,
**caractérisé en ce que**
les parties latérales (151) sont guidées de manière à être forcées de se déplacer par rapport au support respectif (160) dans la direction du décalage en hauteur.

11. Recouvrement multi-pièce selon l'une quelconque des revendications 2 à 10,
**caractérisé en ce que**
les supports (160) des parties latérales (151) s'étendent dans une prolongation latérale de la partie centrale (150) lorsque les parties latérales (151) se trouvent dans la position latérale.

12. Recouvrement multi-pièce selon la revendication 11,
**caractérisé en ce que**
les supports (160) des parties latérales (151) se trouvent dans un plan transversal au véhicule lorsque les parties latérales se trouvent de côté par rapport à la partie centrale.

13. Recouvrement multi-pièce selon l'une quelconque des revendications 2 à 12,
**caractérisé en ce que**
les supports (160) des parties latérales (151) se trouvent dans la partie avant des parties latérales (151) par rapport à la direction d'avance (F).

14. Recouvrement multi-pièce selon la revendication 13,
**caractérisé en ce que**
les parties latérales (151) pivotent sur leur région arrière par rapport à la direction d'avance (F) dans leur position de recouvrement par rapport à la partie centrale (150).

15. Recouvrement multi-pièce selon l'une quelconque des revendications 2 à 12,
**caractérisé en ce que**
les supports (160) des parties latérales (151) se trouvent dans la région arrière des parties latérales (151) par rapport à la direction d'avance (F).

16. Recouvrement multi-pièce selon la revendication 15,
**caractérisé en ce que**
les parties latérales (151) pivotent sur leur région avant par rapport à la direction d'avance (F) dans leur position de recouvrement par rapport à la partie centrale (150).

17. Recouvrement multi-pièce selon l'une quelconque des revendications 2 à 16,
**caractérisé en ce que**
les parties latérales (151) sont connectées aux supports (160) dans la région d'extrémité extérieure de ceux-ci.

18. Recouvrement multi-pièce selon la revendication 17,
**caractérisé en ce que**
les supports (160) s'étendent jusque dans la région des bords des parties latérales (151).

19. Recouvrement multi-pièce selon l'une quelconque des revendications 2 à 18,
**caractérisé en ce que**
les supports (160) sont connectés de manière pivotante aux parties latérales (151).

20. Recouvrement multi-pièce selon la revendication 19,
**caractérisé en ce que**
l'axe de pivotement respectif (166) entre le support (160) et la partie latérale (151) s'étend dans la position latérale de la partie latérale (151) suivant la même orientation que le plan de référence (163).

21. Recouvrement multi-pièce selon la revendication 20,
**caractérisé en ce que**
l'axe de pivotement respectif (166) entre le support (160) et la partie latérale (151) s'étend approximativement dans la direction d'avance (F).

22. Recouvrement multi-pièce selon la revendication 20 ou 21,
**caractérisé en ce que**
l'axe de pivotement respectif (166) entre le support (160) et la partie latérale (151) s'étend transversalement à la direction d'étendue du support (160).

23. Recouvrement multi-pièce selon l'une quelconque des revendications 19 à 22,
**caractérisé en ce que**
l'axe de pivotement (166) entre le support (160) et la partie latérale (151) peut être décalé dans la direction du décalage en hauteur.

24. Recouvrement multi-pièce selon la revendication 23,
**caractérisé en ce que**
l'axe de pivotement (166) entre le support (160) et la partie latérale (151) est connecté par le biais d'une coulisse au support (160) et/ou à la partie latérale (151).

25. Recouvrement multi-pièce selon la revendication 23 ou 24,
**caractérisé en ce que**
la partie latérale (151) et le support (160) sont supportés de manière élastique l'un contre l'autre dans la région de l'axe de pivotement (166).

26. Recouvrement multi-pièce selon la revendication 25,
**caractérisé en ce que**
la partie latérale (151) et le support (160) sont sollicités élastiquement l'un vers l'autre dans la région de l'axe de pivotement (166).

27. Recouvrement multi-pièce selon la revendication 26,
**caractérisé en ce que**
l'axe de pivotement (166) est entouré par un ressort à branches (167) dont les branches sont supportées d'une part contre le support (160) et d'autre part contre la partie latérale (151).

28. Recouvrement multi-pièce selon l'une quelconque des revendications précédentes,
**caractérisé en ce que**
la butée (169) est associée à l'arête de la partie latérale (151) qui se termine contre la carrosserie lors de la fermeture du recouvrement (119).

29. Recouvrement multi-pièce selon la revendication 28,
**caractérisé en ce que**
la butée (169) est associée à l'arête avant dans la direction d'avance (F) de la partie latérale respective, lorsque la partie latérale (151) est ressortie par pivotement dans la direction d'avance (F) par rapport à la partie centrale (150).

30. Recouvrement multi-pièce selon la revendication 29,
**caractérisé en ce que**
la partie latérale (151) se termine par rapport à la partie centrale (150) avec l'arête avant dans la direction d'avance (F) contre la butée (169) lorsque la partie latérale (151) est fermée.
